# EUROPEAN PATENT SPECIFICATION

(11) **EP 1 223 665 B1**
(45) Date of publication and mention of the grant of the patent: **16.04.2014**
(21) Application number: 02100002.1
(22) Date of filing: 09.01.2002
(51) Int. Cl.: H02N 1/00, H02K 5/10

(54) **Improvements in or relating to micro-machines**
Verbesserungen in oder in Bezug auf Micromaschinen
Ameliorations relatives ou liées aux micro-machines

(30) Priority: 10.01.2001 US 757850
(43) Date of publication of application: 17.07.2002
(73) Proprietor: Texas Instruments Incorporated, Dallas, Texas 75251 (US)
(72) Inventor: KEATON, Mark W., 75063, Irving (US)
(74) Representative: Holt, Michael

(56) References cited:
- EP-A- 0 943 923
- US-A- 5 477 097
- US-A- 5 894 452
- PATENT ABSTRACTS OF JAPAN vol. 014, no. 309 (P-1071), 4 July 1990 (1990-07-04) & JP 02 098669 A (FUJIKURA LTD), 11 April 1990 (1990-04-11)

## Description

This invention relates generally to microelectromechanical machines (MEMS) and more particularly to an apparatus and method of reducing particulate contamination in motor gaps associated therewith.

### Background of the Invention

Microelectromechanical machines (MEMS) are manufactured by the well-known process of surface micromachining. Using surface micromachining, even complicated three dimensional micromechanical structures like micromotors may be created. Micromotors are generally classified in relation to the nature of the movement they create, *e.g.* rotary or linear. Both rotary and linear micromotors are essentially made up of a rotary or linearly moving part known as a rotor and a fixed part called a stator. Both rotary and linear micromotors benefit from microscopic gaps between the rotor and stator. The gaps between the rotor and the stator allow for electromagnetic or electrostatic forces to be created between the stator and the rotor and also allow for rotor movement in response to the forces generated between the stator and the rotor. Both rotary and linear micromotors require support elements that permit relative motion between the rotor and stator while providing the structural integrity of the rotor and stator assembly. For linear micromotors the rotor will be referred to as the slider.

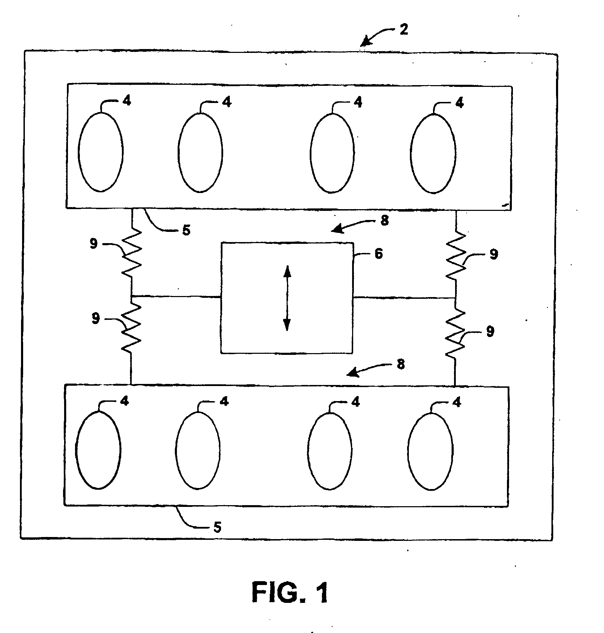

Fig. 1 is a plan view illustrating one layer of a simple linear electromagnetic micromachine 2, exhibiting motor gaps 8 between the stators 5 and the slider 6. The slider 6 moves, for example, in response to forces generated by passing a current through a plurality of coils 4. These forces deflect the support elements 9 and accelerate the slider 6. The slider 6 may be prevented from moving if the motor gaps 8 become contaminated with particles.

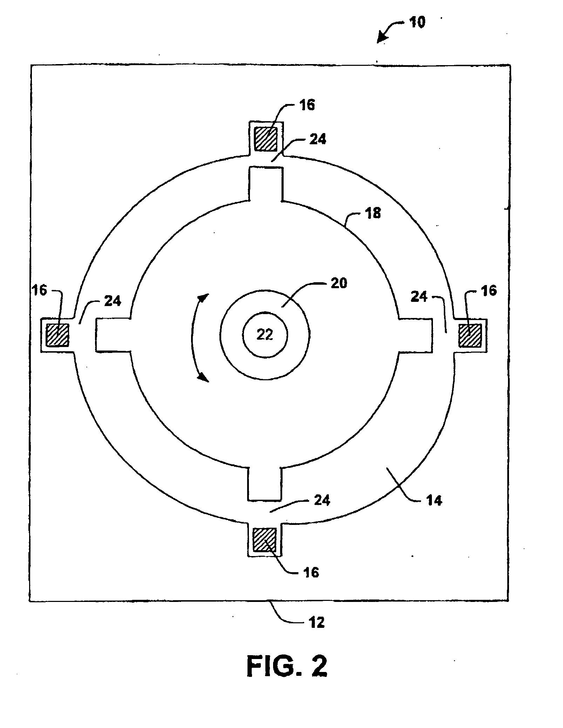

Fig. 2 is a plan view illustrating a rotary type micromotor 10. The micromotor 10 is formed on a substrate 12. The substrate 12 is etched with a cavity 14 wherein one or more stators 16 are positioned around a rotor 18. The cavity 14 allows for the rotor 18 to rotate in response to forces generated between the stators 16 and the rotor 18. The rotor 18 is separated from the stators 16 by one or more motor gaps 24 and supported by rotary support elements 20. Conventionally, the motor gaps 24 have been vulnerable to contamination by particles. Blocking particles from entering the motor gaps 24 prevents damage and degradation of performance to the micromotor 10 from such particles.

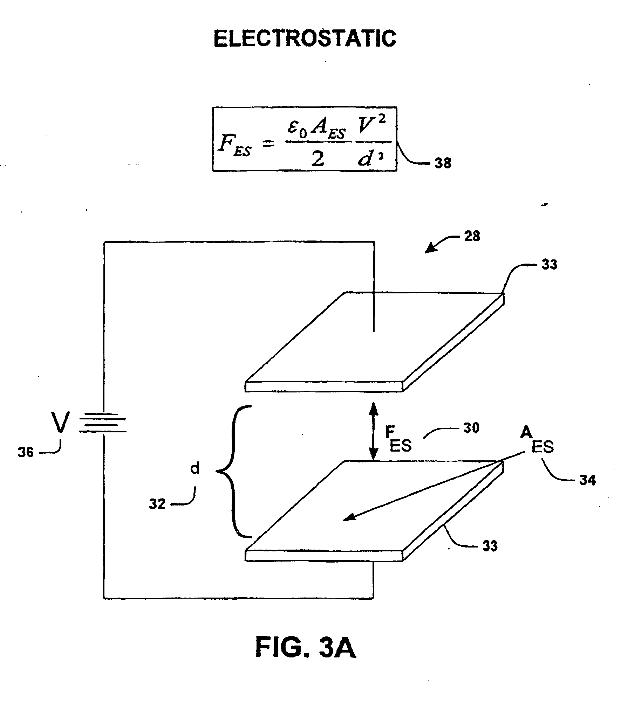

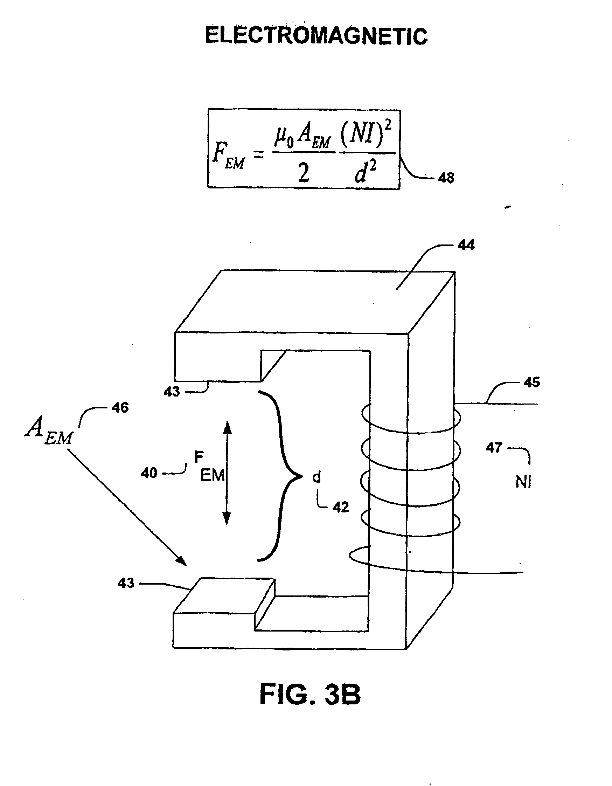

There are basically two types of MEMS microactuators, electric and magnetic, known generally as electrostatic and electromagnetic microactuators depending on whether the force causing the slider motion is an electric field or magnetic field. An exemplary structure for generating an electrostatic force is illustrated in Fig. 3A. A force F_{ES} 30 is generated between two plates 33 with surface area 34 by the application of a voltage V 36 to the illustrated circuit. The electrostatic force F_{ES} 30 is affected by the size of the gap d 32 between the plates 33, which is factored into the equation 38 characterizing the electrostatic force generated by the structure illustrated in Fig. 3A. An exemplary structure for generating an electromagnetic force is illustrated in Fig. 3B. A force F_{EM} 40 is generated between two ends of a structure 44, wrapped with coils 45. The electromagnetic force F_{EM} 40 is affected by the size of the motor gap d 42 and gap area 43, which are factored into the equation 48 characterizing the electromagnetic force generated by the structure illustrated in Fig. 3B.

Not shown in Fig. 3A or 3B are support structures that ideally permit motion in the motor axis but are stiff otherwise. These structures serve the function of bearings in conventional motor assemblies that enable relative motion between rotor and stator while maintaining system alignment. In addition, the design of these support structures in relation to the forcing elements of Fig. 3A or 3B determine if the device creates linear or rotary motion.

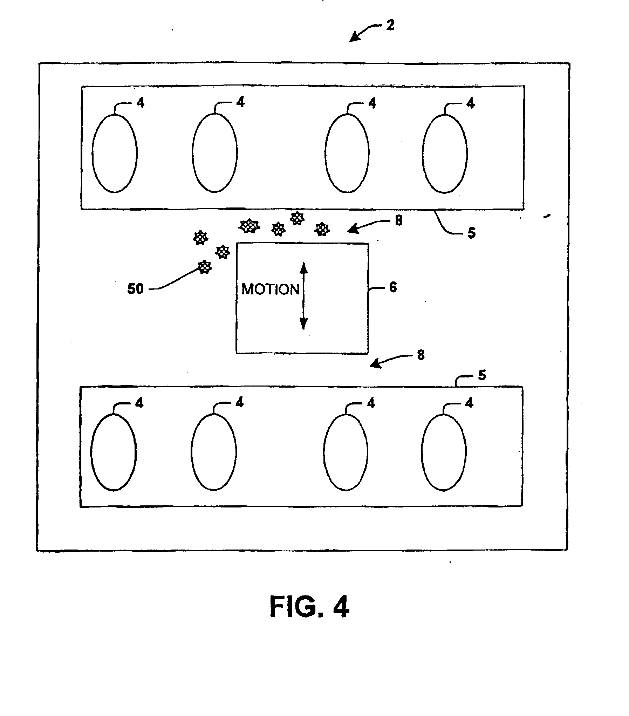

Electrostatic microactuators operate by selectively supplying a potential difference between the slider and the stator. The slider is located in a certain geometrical relationship to the stators and is attracted to the stators by an electrostatic force. Linear motion of the slider may be created in this fashion. Electromagnetic microactuators, however, operate by creating a magnetic flux, which is generated by current flowing through an inductive component, which attracts a magnetically moveable slider. As noted above, both electrostatic and electromagnetic microactuators have small gaps between their moving parts and their stationary parts known as motor gaps. If particles enter the motor gaps of a micromotor, such particles can reduce the efficiency of the micromotor or even cause the micromotor to cease functioning completely. For example, in Fig. 4, one or more particles 50 are illustrated contaminating a motor gap 8 in one layer of a micromachine 2. Such contaminating particles 50 may completely fill the motor gap 8 and cause the slider 6 to be mechanically frozen with respect to the stator 5. Furthermore, in electrostatic microactuators, electrically conductive contaminating particles may cause a short circuit condition between the stator 5 and the slider 6 thereby rendering the micromotor inoperable.

United States Patent No. 5477097 describes an electrostatic micro-actuator with a high viscosity fluid having a high dielectric constant sealed between the movable element and fixed electrodes. The movable element is shaped so as to be stable in the fluid, so that the movable element keeps stable motion even at a low speed.

Therefore, there is a need in the prior art for MEMS structures and methods for avoiding disadvantages associated with contaminant particles.

### Summary of the Invention

The present invention resides in a micromachine and in a method of forming thereof as set out in the appended claims.

More particularly the present invention relates to a micromotor having motor gaps that are substantially sealed from the external environment by a flexible barrier. Such sealed micromotors may not be subject to problems caused by unwanted particles in the motor gaps (e.g., wear, electrical shorting, mechanical freezing) and thus the efficiency and longevity of the micromachine may be improved. Since particles are prevented from entering the motor gaps, smaller gaps may be designed into the micromotors, thus allowing larger electrostatic and electromagnetic forces to be created.

Given the need in MEMS microactuators for structural support elements, it is possible to locate these structural support elements by design to provide the barrier used to block particles from entering the motor gaps. These support structures are generally elastic or deformable in the direction of linear motor movement but lends support and strength by being generally non-deformable in other axes, thus providing for a more reliable microactuator by substantially eliminating problems associated with contaminant particles in the motor gaps. The structural support system can be fabricated of various materials (permalloy, silicon, and elastomers are examples) such that the system provides the stiffness and barrier characteristics necessary for system performance.

A linear microactuator may be fabricated using the well known method of micromachining layers of structural and sacrificial material. Such micromachining methods conventionally produce a rotor or slider free from contact with one or more stators. But the conventional method also leaves the space between the slider and one or more stators vulnerable to infiltration from contaminant particles. Modifying the fabrication method wherein the support structures are deposited around the circumference of the micromotor which mitigates problems caused by the invasion of contaminant particles. The structural support structures that prevent contamination will be referred to as barriers. Depending on the material properties and geometry, barriers may be an integral part of the microactuator structural design.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention may become apparent from the following detailed description of the invention when considered in conjunction with the drawings.

### Brief Description Of The Drawings

Fig. 1 is a plan view illustrating a linear type micromotor;
Fig. 2 is a plan view illustrating a rotary type micromotor;
Fig. 3A is a perspective view illustrating a structure for generating an electrostatic force capable of moving a slider and an equation characterizing the electrostatic force;
Fig. 3B is a perspective view illustrating a structure for generating an electromagnetic force capable of moving a slider and an equation characterizing the electromagnetic force;
Fig. 4 is a plan view illustrating particles contaminating a motor gap in a linear motion microactuator;
Fig. 5 is a schematic diagram illustrating a disk, a suspension arm for a read/write head and a MEMS microactuator;
Fig. 6 is a top view of a MEMS microactuator showing flux flow and force producing gaps;
Fig. 7 is a cross-sectional view of a multi-layered microactuator with its motor gaps open to invasion from particles;
Fig. 8 is a cross-sectional view of a multi-layered microactuator with its motor gaps sealed from particles;
Fig. 9 is a cross-sectional view of a multi-layered microactuator with its motor gaps sealed from particles with the barrier sealing the motor gaps deformed in the direction of the linear motion;
Fig. 10 is a top view of one layer of a multi-layered microactuator with its motor gaps sealed from particles; and
Fig. 11 is a top view of one layer of a multi-layered microactuator with its motor gaps not sealed from particles.

### Detailed Description of the Invention

The present invention is now described with reference to the drawings, wherein like reference numerals are used to refer to like elements throughout. In the following description, for purposes of explanation, numerous specific details are set forth in order to provide a thorough understanding of the present invention. It may be evident, however, to one skilled in the art that the present invention may be practiced without these specific details. In other instances, well-known structures and devices are shown in block diagram form in order to facilitate description of the present invention. In addition, although described herein with reference to an electromagnetic machine, and in particular an electromagnetic microactuator, those skilled in the art should understand that the concepts presented are equally applicable to the fabrication of a wide variety of micromotors that have motor gaps.

As discussed briefly above, microelectromechanical machines (MEMS) typically comprise a moving part, known as a rotor or slider that is positioned relative to a non-moving part, known as a stator, in such a manner that a small gap known as a motor gap is formed between the slider and the stator. The distance between the stator and slider across the motor gap may be on the order of ten micrometers. A support element holds the rotor and stator assembly together while permitting relative motion. Electrostatic or electromagnetic fields may be generated across the motor gap causing the slider to move within the stator by deflecting the support element. If one or more contaminating particles enter the motor gap, the performance of the motor may be degraded by either mechanical forces like friction or electrical short circuiting. Thus, the present invention provides a barrier by designing the barrier elements to prevent particles from entering the motor gaps.

The slider, stator and, motor gap and structural support elements may be microfabricated, for example, through a process involving depositing, processing and removing layers of building materials. For example, a first sacrificial layer may be deposited onto a substrate, with a structural film deposited over the first sacrificial layer to form the slider. Then a second sacrificial layer may be laid over the slider covering an edge of the slider. A second structural layer may then be deposited over the second sacrificial layer and along the edge of the slider, thus connecting to the substrate and forming the stator. The sacrificial layers may then be removed *via* various types of processing to free the slider from the stator. In the prior art, such a manufacturing process left the motor gaps between the slider and the stator exposed to the external environment and thus particles were able to enter the motor gaps. In accordance with the present invention, through the inclusion of the barrier elements inserted between building layers, for example an elastomer web, the motor gaps may be sealed, mitigating mechanical and electrical problems found in the prior art.

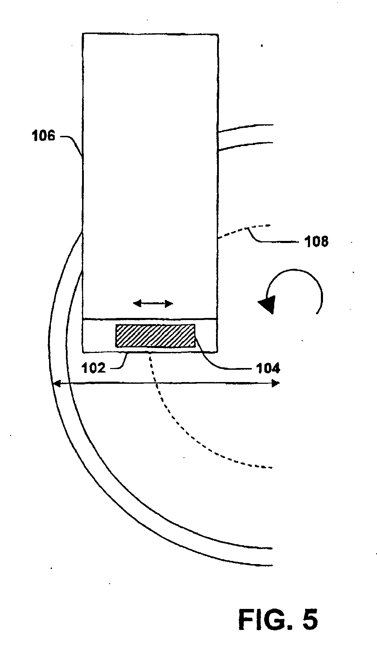

An exemplary application of the present invention is a micromotor that provides very fine control of a read/write head in a disk drive. For example, in Fig. 5 a microactuator 102 may be used to finely position a read/write head 104 suspended by an arm 106 over a track of data 108. In the prior art, particles, for example iron particles from components in the disk drive, could enter the motor gaps and produce mechanical or electrical problems. If particles enter the motor gaps of the microactuator 102 then the microactuator's performance could degrade, even to the point of non-performance, and the read/write head 104 may not be properly positionable over the track of data 108, rendering the disk drive inoperable. By sealing the motor gaps in the microactuator 102, particles may not enter the motor gaps and thus may not degrade performance.

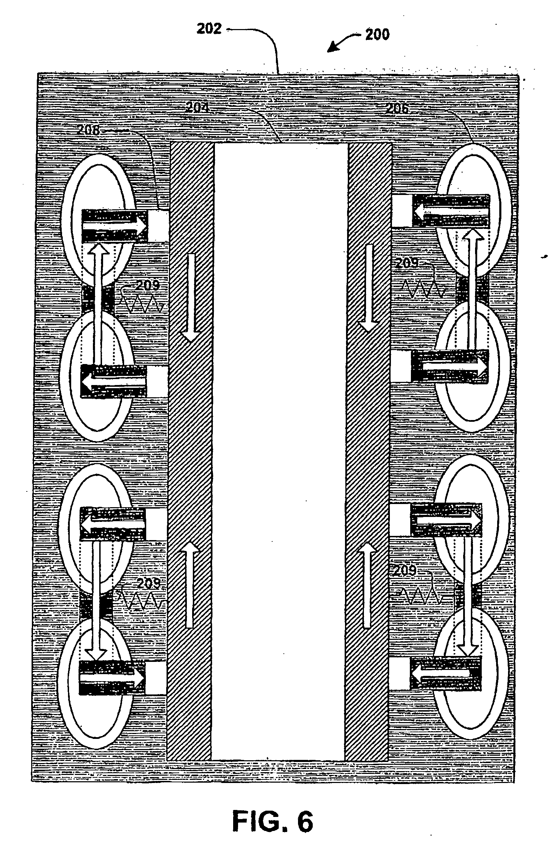

Fig. 6 is a top view of an exemplary MEMS electromagnetic microactuator 200. The microactuator 200 includes a substrate 202 in which a slider 204 is positioned. The slider 204 is separated from a plurality of planar coils 206 by a plurality of motor gaps 208 and supported by a plurality of barrier elements 209. As illustrated in Fig. 3B, the existence and size of the motor gaps 208 are related to the electromagnetic force generated in the microactuator 200 and the resulting operability of the microactuator 200. As discussed previously, the motor gaps 208 may become contaminated with particles. Such contamination may negatively affect the operation of the microactuator 200 via mechanical forces like friction or electrical shorting. Thus, means for blocking particles from entering the motor gaps 208 is required.

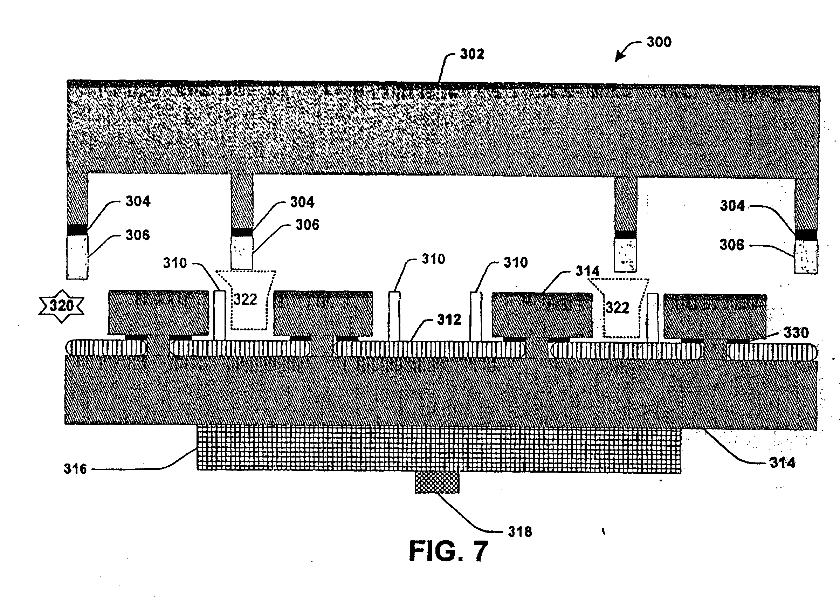

Fig. 7 is a cross-sectional view of an exemplary multi-layered electromagnetic microactuator 300. As illustrated, particles 320 may enter the microactuator 300 and block the motor gaps 322. It is to be appreciated by one skilled in the art that the microactuator 300 illustrated in Fig. 7 is but one example of microactuator design, and the present invention is applicable to other micromotors well-known in the art and thus Fig. 7 is not intended to be a limitation on the present invention.

Describing a construction that is well known in the art, the electromagnetic microactuator 300 may include, for example, a permalloy top cover layer 302 that is connected by a first adhesive layer 304 to a stationary permalloy layer 306. A second adhesive layer 330 also connects layers of a moving permalloy 314 to a polymer holding one or more coils 312. The coils 312 are positioned on the moving permalloy 314 that is positioned above a slider 316 that is connected to a read/write head 318. The electromagnetic forces generated by the coils 312 move the permalloy layer 314 and thus the slider 316 relative to the permalloy top cover 302 and the stationary permalloy 306. The structural support elements in this design are permalloy support elements 310 that enable linear travel of the slider 316 within a predetermined range and help return the slider 316 to its original position when the force generated in the coils 312 is removed.

As discussed above, the movement of the slider 316 may be negatively affected by the entry of the particles 320 into the motor gaps 322. Thus, means for blocking particles 320 from entering the motor gaps 322 are desirable and are provided by the present invention.

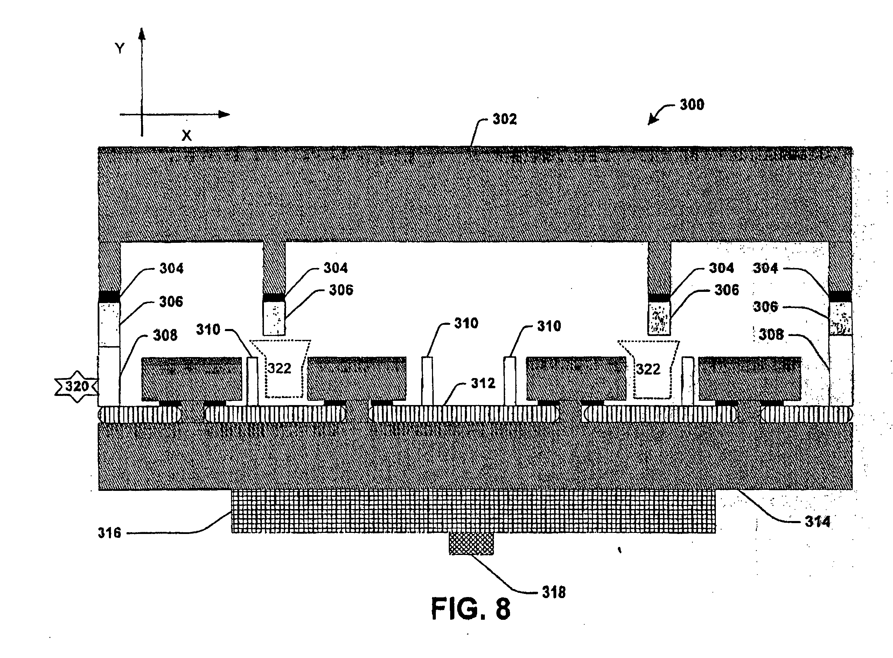

Fig. 8 is a cross-sectional view of the microactuator 300 with its motor gaps 322 sealed from particles 320 by an additional flexible barrier element 308. The barrier element 308 may be inserted, for example, around the perimeter of the microactuator 300 to substantially fill gaps through which particles 320 could enter. The barrier element 308 thus blocks particles from entering the motor gaps 322 and thus mitigates the problems of contaminating particles in the prior art. With the barrier element 308 in place, external particles 320 may not enter the motor gaps 322 and thus the motion of the slider 316 may not be hampered by the electrical and mechanical problems described above.

The barrier element 308 may be, for example, an elastomer web. Such an elastomer web may be incorporated into the microactuator 300 during the fabrication process after the freeing of the slider 316. With the sacrificial material removed during the process that frees the slider 316, the paths through which the sacrificial material passed subsequently may be blocked by the barrier element 308. Such a polymer web may substantially isolate the internal environment of the microactuator 300 from the external environment.

The barrier element 308 may connect the stationary permalloy layer 306 to the polymer holding the coils 312. Such connection may increase the strength and stability of the microactuator 300. For example, motion of the permalloy top cover layer 302 in the Y direction illustrated may be reduced. Similarly, rotation or twisting of the component parts of the microactuator 300 with respect to one another may be reduced by the barrier element 308.

The barrier element 308 may be, by way of further example, a solid polymer bead distributed around the perimeter of the microactuator 300 substantially filling the paths through which particles 320 could enter the motor gaps 322 in the microactuator 300. Although involving more material than the polymer web described above, such a solid bead may also mitigate the electrical and mechanical problems described above.

The barrier element 308 is illustrated as being located at the outside perimeter of the microactuator 300. But alternative placements for the barrier element 308 may also mitigate the particle contaminant problems described above. For example, the barrier element 308 may be situated in other locations between the external environment and the internal motor gaps 322. Such alternative locations may also mitigate the electrical and mechanical problems described above and are contemplated by the present invention.

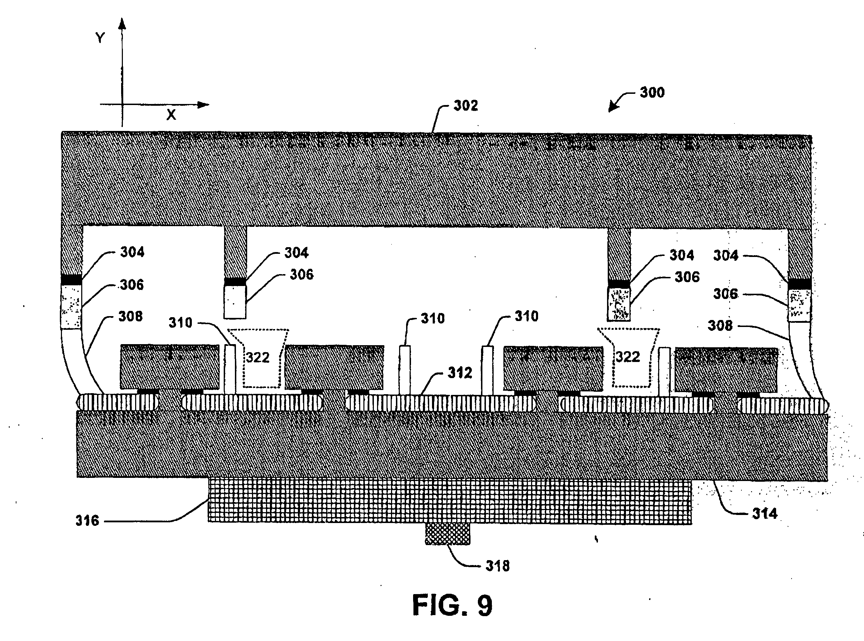

Fig. 9 is a cross-sectional view of the microactuator 300 with the slider 316 repositioned relative to the stationary permalloy 306. Such repositioning may require the barrier element 308 to deform in the direction of the relative motion of the slider 316 (*e.g.*, in the "-X direction as shown). The barrier element 308 allows for such relative motion in the direction of the slider motion while still sealing the motor gaps 322. Continued sealing of the motor gaps 322 during motion of the slider 316 further mitigates the problems in the prior art described above.

While allowing the illustrated repositioning of the slider 316, the barrier element may also contribute strength and stability to the microactuator 300. For example, motion of the component parts of the microactuator 300 in the Y direction illustrated in Fig. 9 may be restricted by the barrier element 308.

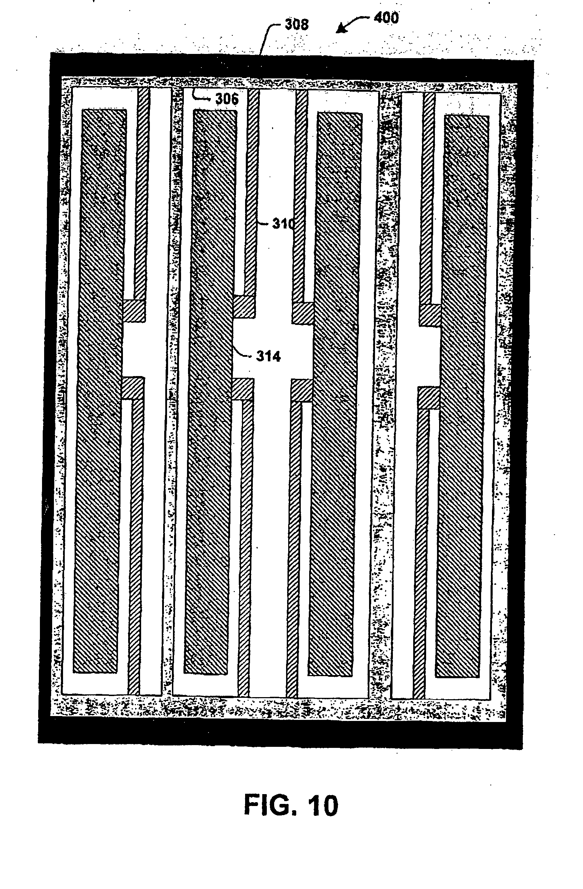

Fig. 10 is a top view of a microactuator 400 sealed from particles by a barrier element 308. The microactuator 400 is thus less susceptible to the problems created by contaminating particles as described above. The microactuator 400 includes a stationary permalloy 306 connected to a moving permalloy 314 by one or more permalloy springs 310. The barrier element 308 may be, for example, a polymer web. The polymer web may be deposited, for example, around the perimeter of the microactuator 400 substantially isolating the internal environment, including the motor gaps, from the external environment. The barrier element 308 may also be, by way of further example, a solid polymer bead. Such a bead may also substantially isolate the internal environment of the microactuator 400 from the external environment. Such isolation aids in mitigating the problems of particulate contamination.

In Fig. 10. the barrier element 308 has been deposited around the perimeter of the microactuator 400. But other placements for the barrier element 308 may also aid in mitigating the problems in the prior art described above. For example, the barrier 308 may be situated in other locations so that the internal environment, including the motor gaps, and the external environment are isolated. Such alternative locations may also mitigate the electrical and mechanical problems in the prior art described above.

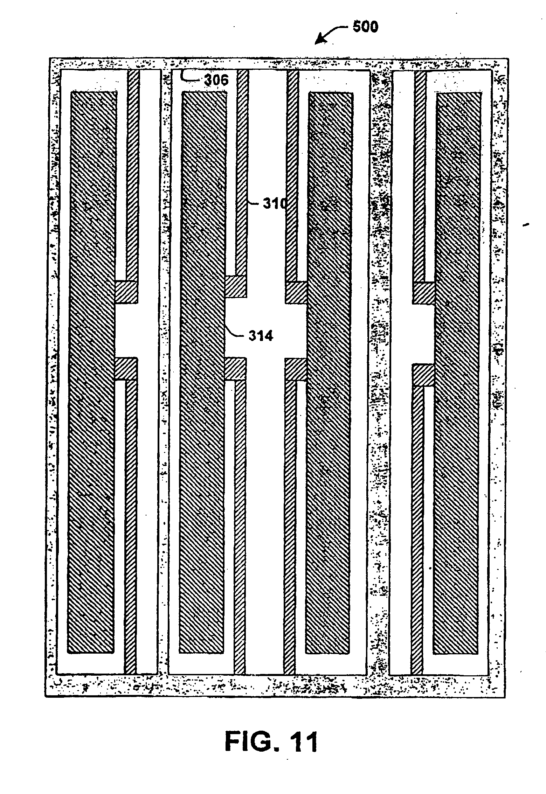

Fig. 11 is a top view of a microactuator 500 not sealed from particles. The microactuator 500 is thus susceptible to the problems created by particles as described above.

Although the invention has been shown and described with respect to a certain preferred applications or implementations, equivalent alterations and modifications will occur to others skilled in the art upon the reading and understanding of this specification and the annexed drawings. In particular regard to the various functions performed by the above described components (assemblies, devices, circuits, etc.), the terms (including a reference to a "means") used to describe such components are intended to correspond, unless otherwise indicated, to any component which performs the specified function of the described component (*i.e.*, that is functionally equivalent), even though not structurally equivalent to the disclosed structure which performs the function in the herein illustrated exemplary embodiments of the invention. In addition, while a particular feature of the invention may have been disclosed with respect to only one of several implementations, such feature may be combined with one or more other features of the other implementations as may be desired and advantageous for any given or particular application. Furthermore, to the extent that the term "includes" is used in either the detailed description or the claims, such term is intended to be inclusive in a manner similar to the term "comprising."

## Claims

1. A micromachine comprising:
a micromotor (300) comprising one or more movable parts (314, 316), and one or more stationary parts (306, 312) separated by one or more motor gaps (322); and
a flexible barrier (308) for blocking particles (320) from entering the one or more motor gaps (322), the barrier (308) being deformable in the direction of linear motor movement and non-deformable in other axes.

2. The micromachine of claim 1, wherein the micromotor (300) is a rotary micromotor.

3. The micromachine of claim 1, wherein the micromotor (300) is a linear microactuator.

4. The micromachine of any of claims 1 to 3, wherein the barrier (308) is an elastomer web.

5. The micromachine of any of claims 1 to 3, wherein the barrier (308) is an elastomer bead.

6. The micromachine of any of claims 1 to 5, wherein the barrier is positioned around the perimeter of the micromachine (300).

7. The micromachine of any preceeding claims, wherein the micromotor is formed using surface micromachining.

8. A method for manufacturing the micromachine of any preceding claim including the steps of:
depositing a flexible barrier to isolate the internal environment of the micromachine from the environment external to the micromachine, the barrier being deformable in the direction of linear motor movement and non-deformable in other axes.

## Patentansprüche

1. Eine Mikromaschine bestehend aus:
einem Mikromotor (300) bestehend aus einem oder mehreren beweglichen Teilen (314, 316), und einem oder mehreren stationären Teilen (306, 312), die von einem oder mehreren Motorintervallen getrennt werden, und
einem flexibelen Schutz (308), um der Zugang der Partikeln (320) in dem ein oder mehreren Motorintervallen (322)zu verhindern, der Schutz (308) seiend verformbar in der Richtung der Linearmotorbewegung und nicht verformbar in anderen Achsen.

2. Die Mikromaschine nach Anspruch 1, wobei der Mikromotor (300) einen Drehmikromotor ist.

3. Die Mikromaschine nach Anspruch 1, wobei der Mikromotor (300) einen Linearmikroaktuator ist.

4. Die Mikromaschine nach Anspruchen 1- 3, wobei der Schutz (308) ein Elastomerstoff ist.

5. Die Mikromaschine nach Anspruchen 1- 3, wobei der Schutz (308) ein Elastomerwulst ist.

6. Die Mikromaschine nach Anspruchen 1-5, wobei der Schutz (308) um den Umkreis der Mikromaschine (300) gestellt wird.

7. Die Mikromaschine nach allen vorhergehenden Ansprüchen, wobei der Mikromotor durch Mikrobearbeitung geformt ist.

8. Ein Verfahren zur Herstellung der Mikromaschine nach allen vorhergehenden Ansprüchen einschliesslich der Schritte von:
der Ablagerung eines flexibelen Schutzes, um das innere Milieu der Mikromaschine von dem Milieu, das ausserhalb der Mikromaschine ist, zu isolieren, der Schutz seiend verformbar in der Richtung der Linearmotorbewegung und nicht verformbar in anderen Achsen.

## Revendications

1. Une micromachine comprenant :
un micromoteur (300) comprenant une ou plus de pièces mobiles (314, 316), et une ou plus de pièces stationnaires (306, 312) séparées par une ou plus d'intervalles de moteur (322) ; et
une barrière flexible (308) pour bloquer des particules (320) d'entrer l'une ou plus d'intervalles de moteur (322), la barrière (308) étant déformable vers la direction de déplacement de moteur linéaire et non-déformable dans les autres axes.

2. La micromachine selon la revendication 1, où le micromoteur (300) est un micromoteur rotatif.

3. La micromachine selon la revendication 1, où le micromoteur (300) est un micro-actionneur linéaire.

4. La micromachine selon les revendications 1 - 3, où la barrière (308) est une toile élastomère.

5. La micromachine selon les revendications 1-3, où la barrière (308) est une baguette élastomère.

6. La micromachine selon les revendications 1 - 5, où la barrière se trouve autour le périmètre de la micromachine (300).

7. La micromachine selon n'importe des revendications précédentes, où le micromoteur est formé en utilisant le micro-usinage de surface.

8. Une méthode pour fabriquer la micromachine de n'importe revendication précédente comprenant les étapes de :
déposer une barrière flexible pour isoler l'environnement interne de la micromachine de l'environnement à l'extérieur de la micromachine, la barrière étant déformable vers la direction de déplacement de moteur linéaire et non-déformable dans les autres axes.
